# EUROPEAN PATENT APPLICATION

(11) **EP 3 165 513 A1**
(43) Date of publication of application: **10.05.2017**
(21) Application number: 15193198.7
(22) Date of filing: 05.11.2015
(51) Int. Cl.: C04B 33/132, C04B 35/626, C09K 8/80

(54) **SINTERED SPHERES, PROCESS FOR THEIR PRODUCTION AND USE THEREOF**

(71) Applicant: ZaaK Technologies GmbH, 08064 Zwickau (DE)
(72) Inventor: KHAN, Abbas, 08064 Zwickau (DE)
(74) Representative: Müller & Schubert

(57) **Abstract**

Described herein are sintered spheres, obtained from red mud, comprising at least aluminium oxide, iron oxides, silicon oxide, and titanium oxide, characterized in that the roundness and the sphericity of the sintered spheres is higher than 0.6.

Described is further a process for the production of sintered spheres, comprising the following steps:
a) providing red mud, being a residue from alumina production,
b) optionally adjusting the pH value of the red mud to a value lower than 9,
c) granulating the red mud from step b) under continuous drying,
d) sintering the granulate from step c).

Described herein is also the use of sintered spheres as proppant in fracking processes or as aggregate for construction purposes or for geological solidification processes.

## Description

The present invention relates to sintered spheres, intermediate products for making the same, process for their production and use thereof.

Environmental compliance requirements cost alumina refineries 5-10% of alumina production cost for the sustainable disposal of red mud. Red mud is produced from the Bayer process in converting bauxite ore into alumina. In 2010, about 120 million tonnes of red mud were produced worldwide. In the same year, Australia produced approx. 19 million tonnes of red mud. In average less than 5% of the red mud produced is utilised, while most of the remaining 95% is dumped into mud ponds (lagoons), increasing the threat to the local environment. Red mud presents a huge problem as it takes up large land areas which can neither be built on nor farmed - even when dry. An adequate storage and disposal solution for red mud is very costly. As additional environmental legislation and industrial restrictions develop, the costs for adequate storage and disposal solutions continue to increase.

According to US Energy Information, Australia has 396 trillion cubic feet technically recoverable shale gas resources which is equivalent to about 20% of the combined equivalent resources of Canada, Mexico and the United States. Australia could become among the top five shale gas producers which is currently led by the USA, to feed to the two ever energy hungry Asian nations, China and India.

Frac sand is used in hydraulic fracking to hold fissures or cracks open so that petroleum from the shale can flow up to the surface. It plays an important role in shale gas recovery and economics.

Frac sand is manufactured from 500 million year old super mature sandstone deposits, i.e., Cambrian-Ordovician mainly available in USA and Canada. The rock units are composed of quartz grains that have been through multiple cycles of weathering and erosion. These rocks are relatively soft and poorly cemented. This allows quartz grains to excavate and crush with minimal damage to it.

However, these quartz grains are irregular in shape. The irregular shape forms a loose packed structure and reduces gas flow to the surface. Additionally, not all sandstone deposits meet frac sand API RP 56 specifications. Young sandstone deposits produce low strength frac sand which reduces the well's life due to fines created from high closure stress.

Many attempts have been made in order to recycle or to re-use red mud but these attempts have not yet led to a suitable solution of the disposal problem. Furthermore, many attempts have been made to re-use red mud for the production of fracturing propping agents.

It is an object of the invention to solve the problem of the waste disposal of red mud. It is also an object of the invention to provide useful materials like aggregates, sand, proppants and the like, that are derived directly from red mud.

The problem is solved by providing sintered spheres, comprising material that is present in red mud. Those materials present in red mud include especially aluminium oxide, iron oxides, silicon oxide, and titanium oxide.

The problem is further solved by providing a process for the production of sintered spheres directly from red mud slurry.

The problem is further solved by an intermediate product that is derived from red mud, comprising the same materials as present in the sintered spheres according to the invention.

Furthermore, the problem is solved by the use of an intermediate product according to the invention for the production of sintered spheres according to the invention.

Finally, the problem is also solved by the use of sintered spheres according to the invention as proppant in fracking processes or as aggregate for construction purposes or for geological solidification processes.

An object of the present invention are sintered spheres, obtained from red mud, comprising at least aluminium oxide, iron oxides, silicon oxide, and titanium oxide, characterized in that the roundness and the sphericity of the sintered spheres is higher than 0.6 for both sphericity and roundness. One main feature of the present invention is that the sintered spheres are directly made from red mud, preferably in form of a slurry. Red mud from which the sintered spheres according to the invention are obtained comprises at least aluminium oxide, iron oxide, silicon oxide, and titanium oxide. The named compounds are the main components of which red mud consists. Red mud used according to the invention is obtained preferably from the Bayer process.

Preferred are sintered spheres according to the invention, wherein the size of the sintered spheres is in the range from 0.2 mm to 1 mm. Preferred are also sintered spheres according to the invention, wherein the water absorption is in the range up to 8%. Preferred are also sintered spheres according to the invention, wherein the bulk density is in the range from 1,100 to 1,400 kg/m³. Sintered spheres showing the herein described properties of the size of the spheres, their water absorption capability and their bulk density are suitable for many uses. These uses comprise the use as proppant or as aggregate, for example.

Preferred are also sintered spheres according to the invention, wherein the sintered spheres comprise additives and/or binders. Especially preferred are sintered spheres according to the invention, wherein the additives are selected from the group consisting of feldspar minerals, alumina minerals, calcinated alumina minerals, clay minerals, or silicate minerals, or mixtures thereof. The named additives are commonly used additives in the production of aggregates or proppants. The additives used according to the present invention include those materials that contribute advantageous properties like hardness or resistibility to the finished materials. Additives may be used according to the present invention in a range of up to 20% or more, depending on the demanded properties.

Further preferred are also sintered spheres according to the invention wherein a binder is added. According to the invention the binder is selected from the group consisting of polyvinyl alcohol, polyvinyl acetate, methyl cellulose, dextrine and molasses. The binders used according to the invention support the process of granulation, especially when using a continuous spray granulation.

Another object of the present invention is a process for the production of sintered spheres according to the invention, comprising the following steps, one after the other:
a) providing red mud, being a residue from alumina production,
b) optionally adjusting the pH value of the red mud to a value lower than 9,
c) granulating the red mud from step b) under continuous drying,
d) sintering the granulate from step c).

The process according to the invention described herein has the advantage that red mud derived directly from the Bayer process of alumina production, for example, may be used as starting material for the process according to the invention. Optionally, one has to reduce the pH value to a value lower than 9, in order to facilitate the following process steps.

Especially preferred is a process according to the invention, wherein a step b1) is performed after step b), wherein additives and/or binders are admixed to the red mud and wherein the additives are selected from the group consisting of feldspar minerals, alumina minerals, calcinated alumina minerals, or silicate minerals, or mixtures thereof, and wherein the binder is selected from the group consisting of polyvinyl alcohol, polyvinyl acetate, methyl cellulose, dextrine and molasses, or a mixture thereof. The advantages of the additives and binders are already explained within the present description. The same advantageous applies also to the process performed according to the invention.

Especially preferred is also the process according to the invention, wherein in step b) a slurry is formed form the red mud by adding water, and wherein the ratio of red mud and water is the range from 35 / 65 to 65 / 35 (w/w). The use of red mud in form of a slurry is highly advantageous, because red mud possesses already a high quantity of water. The high plasticity of red mud is useful for the continuous spray process.

Preferred is also a process according to the invention, wherein after step b) the red mud is dried. This optional feature allows an easy adjustment of the water content for producing the slurry.

Especially preferred according to the invention is also a process, wherein after step c) the process is stopped and the obtained product isolated as an intermediate product. The advantage of this preferred embodiment of the present process according to the invention is, that it is possible to isolate an intermediate product. Surprisingly it has been found that this intermediate product already encompasses all positive product properties as present in the sintered spheres end product according to the invention.

Just another object of the present invention are sintered spheres, obtainable by:
a) providing red mud, being a residue from alumina production,
b) optionally adjusting the pH value of the red mud to a value lower than 9,
c) granulating the red mud from step b) under continuous drying,
d) sintering the granulate from step c).

Just another object of the present invention are non-sintered spheres, in form of an intermediate product, obtainable by:
a) providing red mud, being a residue from alumina production,
b) optionally adjusting the pH value of the red mud to a value lower than 9,
c) granulating the red mud from step b) under continuous drying.

Especially it is preferred that the granulation was performed using a fluid bed technology and by a continuous spray granulation

Another object of the present invention is an intermediate product for the preparation of sintered spheres comprising non-sintered spheres, comprising at least aluminium oxide, iron oxides, silicon oxide, and titanium oxide, wherein the roundness and the sphericity of the non-sintered spheres is higher than 0.6. Surprisingly it has been found that the intermediate product already shows the same physical data in respect to roundness and sphericity as the final product in form of the sintered spheres according to the invention. Especially preferred is an intermediate product according to the invention, wherein the density of the non-sintered spheres is in the range of from 800 to 1,000 kg/m³. The bulk density of non-sintered spheres is lower than the bulk density of sintered spheres according to the invention. The reason is that the density becomes higher during this sintering process, which the non-sintered spheres not yet have passed. The intermediate product according to the invention can therefore easily be used in a final sintering process in order to obtain the sintered spheres according to the invention, which then comprise all properties of the sintered spheres.

Therefore, another object of the present invention is the use of an intermediate product, according to the invention for the production of sintered spheres according to the invention.

Finally, another object of the present invention is the use of sintered spheres according to the invention as proppant in fracking processes or as aggregate for construction purposes or for geological solidification processes. The already herein described properties of the sintered spheres according to the invention make the same suitable for different uses. One use according to the invention is the use as proppant in fracking processes. As the sintered spheres according to the invention show the requirements as laid down in the state of the art, they can be used in a wide range of applications in fracking processes. Sintered spheres for use as proppants comprise binder, as it has been shown that the addition of binder improves the roundness and the sphericity of the granulate. When using sintered spheres according to the invention as aggregate higher amounts of additives have to be used in order to provide the physical properties needed in the use as aggregate. For the use as aggregate roundness and sphericity are not a critical property. This shows, that aggregates can be produced with a wide range of properties, like bulk density, hardness, and the like.

The present invention is explained in detail by the attached figures.
Fig. 1 shows photomicrographs of a first intermediate product according to the invention in different image magnifications;
Fig. 2 shows photomicrographs of a second intermediate product according to the invention in different image magnifications;
Fig. 3 shows photomicrographs of a third intermediate product according to the invention in different image magnifications;
Fig. 4 shows, for comparison purposes, photomicrographs of an intermediate product not according to the invention in different image magnifications;
Fig. 5a shows a photomicrograph of sintered spheres according to the invention from wet admixture, and
Fig. 5b shows a photomicrograph of sintered spheres not according to the invention from dry admixture as known in the art.

The manufacturing process for sintered spheres according to the invention involves three key steps:
a) Mixing of raw materials;
b) Granulation; and
c) Sintering.

The granulation process is performed as a granulation from a wet admixture. Before granulation, sieving was performed to remove any coarser particles exceeding 100 µm which would be detrimental to the granulation process.

For sintering, a gas fired direct heated kiln was used for the trial. The maximum temperature of the kiln can reach up to 1,400 °C.

The process according to the invention described herein provides a great range of products that can be produced. The process according to the invention involves some essential parameters which allow the tailoring of the product in respect to the requested needs.

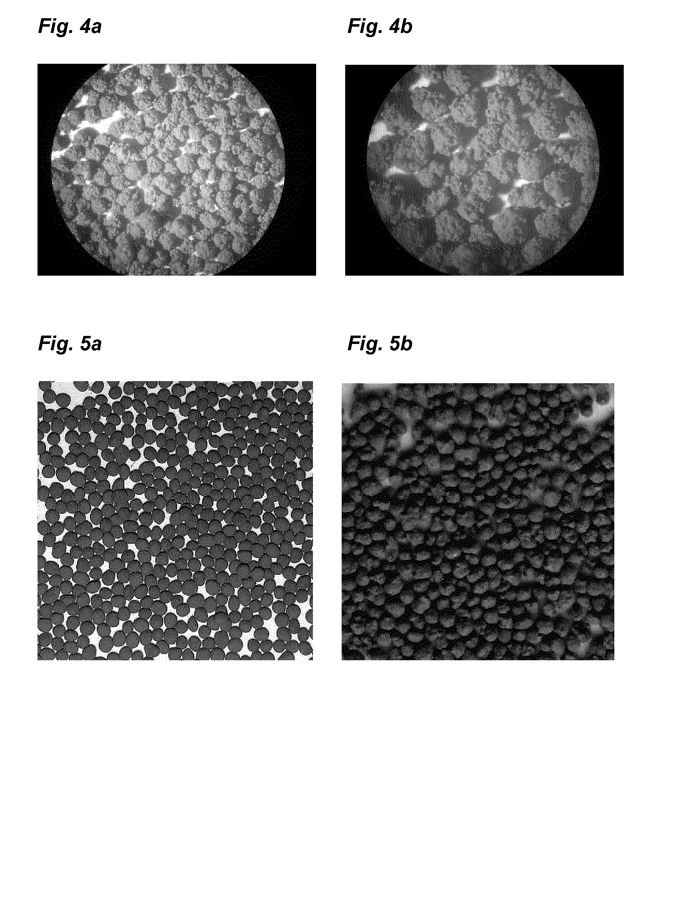

Granulation from slurry can be performed with and without binder. Without a binder, granules of smaller size (∼<300 µm) were produced. In order to increase granules size and granulation (growth) process a binder was used. With 2% (w/w) binder, the granular growing and the continuous new formation of granular particles were observed. However, with further increase in binder to 5% (w/w), rough particle surface granules were produced (see Fig. 4).

Granules produced from wet admixture have a bulk density of 800 - 900 kg/m³. But, the resulting bulk density from the granulation process can be adjusted by the parameters used in the granulation process, i.e. an intensive granulation process produces compact granules resulting in higher bulk density.

Granules produced from slurry are up to 30% lighter than conventional frac sand and ceramic proppants. The lightweight granules (proppants) will help to avoid premature settling in the down-hole placement. The additional benefits from lightweight proppants are, i.a. reduction of consumption of costly gels or polymers; lower consumption of high viscosity gels allows to use low viscosity proppant carrier frac fluid; lower viscosity carrier fluid allows to use slower pump rate, which minimises pipe friction and disturbance of lower lying fluid; minimise equipment, time and personnel required for chemical mixing; low transportation costs, both on land and offshore.

Granules produced from the slurry were having an initial mean grain size in the range from 500 - 600 µm. By varying physical parameters of the granulating process and by the use of binders, grain size could be improved to the desired upper range (600 - 900 µm). The process used also allows to divide the process into two steps: from fine up to 300 µm and 300 µm to 900 µm. This shows that any present demand of users can be fulfilled.

Surprisingly it was found that slurry based granules are very round and spherical. The sphericity and roundness are very high (both >0.9) compared to commercially available ceramic proppants in the market. This is one of the critical factor in shale gas recovery economics. This makes the products according to the invention very useful as proppant.

In order to demonstrate the advantages of the wet admixture for granulation according to the invention a comparative example has been performed. Due to high plasticity of red mud granulation was possible even with 100% red mud, when using the wet admixture according to the invention. This is shown in Fig. 5a. In contrast, granulation from dry admixture, as known in the art, was relatively easy. However, fine stones inside the admixture they were destroying granules and at the same time generating less spherical granules. The resulting granules are shown in Fig. 5b. This comparison shows the advantages of the wet admixture granulation process according to the invention. This wet admixture granulation process according to the invention makes it possible to use 100% red mud for the granulation process and convert the red mud into granules with high sphericity and roundness.

Another parameter is the amount and the type of additive to be used for admixing with red mud. In the presence of additives (up to 20% (w/w) and more), no significant granular effect was observed. Comparing with 0% additives, a marginal reduction of mean grain size and smooth surface was observed. This is due to the fact that additives have a lower plasticity which results in slow granular growth. Very fine nature of additives gives a smoother surface. Additives that can be used according to the present invention are also known in the art. These additives include different types of minerals. Useful for performing the teaching of the present invention are minerals that are selected from the group consisting of feldspar minerals, alumina minerals, calcinated alumina minerals, or silicate minerals, or mixtures thereof. It is believed that the used minerals improve the strengths of the produced sintered spheres. The addition of minerals can also influence the granulation process according to the invention. It is therefore possible, without deviating from the teaching of the present invention, to adjust the sintered spheres produced to the needs of the consumer in respect to different purposes.

Furthermore, the amount and the type of binder to be used is also an essential parameter. Binders are used in the art for converting red mud into fracturing propping agents. Binders have the effect to support and enhance the granulation process. Useful binders as known in the art are for example polyvinyl alcohols, polyvinyl acetates, methyl cellulose, dextrin, and molasses. Further binders may also be used and are part of the present invention, as far as they support and enhance the granulation process.

Surprisingly it has been found that the amount of binder should be below 5% (w/w). Advantageously an amount of up to 2% (w/w) of binder should be used in the process according to the present invention.

It has to be pointed out that the parameters chosen determine the kind of product (aggregate or proppant) and their properties (bulk density, sphericity, roundness) of the product.

As already described herein, one main object of the present invention is to provide an intermediate product that can be used for the production of the final material, the sintered spheres according to the invention. It has surprisingly been found that the intermediate product already shows all important parameters of the sintered spheres. These parameters are especially sphericity and roundness. Depending on the process parameters used during the process, intermediate products can be produced and tested during the production process in respect to the parameters that are essential for the final product. The intermediate product can be stored and handled after being produced and therefore serve as an intermediate product. Using the intermediate product the final product, the sintered spheres can easily be prepared by a sintering process. This means that in the case that red mud lagoons have to be rehabilitated the process of mixing and granulating may be performed close to the lagoons, while the further process of sintering may be performed elsewhere. Therefore, respective plants like kilns have not to be positioned near the lagoons to be rehabilitated. The intermediate product is therefore a key feature of the present invention. The intermediate product comprises the same compounds as the sintered spheres according to the invention. Intermediate products are non-sintered spheres that differ from sintered spheres in that they are not yet sintered.

The teaching of the present invention is illustrated by examples described herein. Table 1 shows the composition of intermediate products according to the invention that are described in the respective examples.

**Table 1**

| Composition of intermediate products | | | | |
|---|---|---|---|---|
| **Example no.** | **Additive** | **Amount % (w/w)** | **Binder** | **Amount % (w/w)** |
| **2** (Fig. 1) | none | 0 | none | 0 |
| **3** (Fig. 2) | none | 0 | PVA | 2 |
| **4** (Fig. 3) | clay mineral | 9.8 | PVA | 2 |
| **5** (Fig. 4) | none | 0 | PVA | 4.8 |

Essential physical parameters and properties of the sintered spheres according to the invention are presented herein already. Based on the type of admixture the sintered spheres according to the invention can be produced in a wide range in respect to their bulk density. The type of admixture has also an impact on the roundness and sphericity of the sintered spheres. It is therefore possible to prepare sintered spheres with different physical and/or chemical properties by simply modifying essential process parameters.

In order to determine if the physical parameters of the sintered spheres according to the invention are sufficient in order to fulfil the requirements for us as "frac sand" or proppant, the same have to be compared with the specification given in the art. API (American Petroleum Institute) has laid out specifications that have to be fulfilled. Some of the physical properties are defined in ISO 13503-2. The definition of sphericity and roundness can be found in those specifications as well.

The teaching of the present invention provides a great range of advantages in respect to environmental challenges. According to the teaching of the present invention it is possible to use red mud for the production of different types of materials for use in fracking technology, as aggregate or sand for building purposes and for landfill use. By using the process according to the invention it is possible to produce a wide range of products that can be used in many applications.

The following examples explain the invention in more details. It is not intended that the examples restrict the scope of the invention.

It is clear, that the given examples do not limit the scope of the invention to the presented examples. The examples are only mentioned for demonstrating the scope of the invention. Without deviation from the principle idea of the invention it is possible for a person skilled in the art to perform the invention in order to obtain further embodiments that are also within in the scope of the invention.

### General procedures

For the moisture analysis the moisture detector MA100 (Sartorius AG) with halogen rays at 105 °C in automatic modus was applied. The bulk density was measured in accordance to DIN ISO 697 and EN ISO 60 using a 100 ml vessel. For the visual investigation of the granules the light optical microscope Technival 2 (Carl Zeiss Jena) was used. The data of the sieving analysis were measured by using the particle size analyzer Camsizer XT (Retsch Technology GmbH, Germany).

### Example 1

### Preconditioning of red mud as starting material

Red mud sample was supplied which has moisture of >30 %. The red mud sample was treated with sodium hydroxide solution to a pH value of 9 and then was dried in oven at 120 °C overnight to remove the moisture. After drying it was gently crushed and ground to less than 1 mm in size. Following this, the sample was sieved using a 1 mm mesh. This product served as a starting raw material for both wet admixture based granulation as well as dry admixture based granulation for comparison purposes (Example 7). The bulk density of the material after crushing and drying (<1 % (w/w) moisture) was 950 ± 100 kg/m³.

### Example 2

### Production of intermediate product directly from red mud slurry

Preconditioned red mud from Example 1 was used. The granulation was performed using a fluid bed technology and by a continuous spray granulation. This spray liquid used for granulation contained about 50% solid material, the rest of the liquid being water.

The process yielded a round shaped product with a measured bulk density of 1023 kg/m³ and a residual moisture of approximately 2 % (w/w).

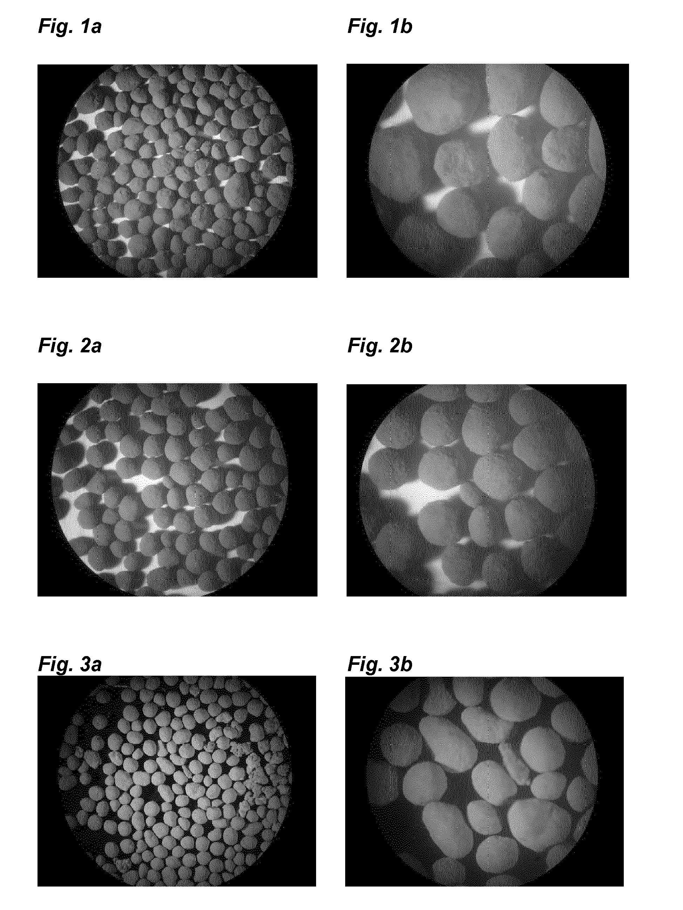

The photomicrograph of the product is shown in Figure 1.

### Example 3

### Production of intermediate product from red mud by addition of binder

Preconditioned red mud from example 1 was used. The granulation was performed in the same manner as given in Example 2. Polyvinyl alcohol (PVA) in a concentration of 2 % (w/w) was added to the spray liquid used. The spray liquid used contained about 50 % (w/w) solid material the rest of the liquid being water.

The process yielded to a round shaped product with a measured bulk density of 805 kg/m³ and residual moisture of 3.1 % (w/w).

The photomicrograph of the product is shown in Figure 2

### Example 4

### Production of intermediate product from red mud by addition of binder and additive

Again, preconditioned red mud from Example 1 was used. Clay mineral in an amount of 9.8 % (w/w) was blended with the preconditioned red mud. Polyvinyl alcohol in a concentration of 2 % (w/w) was added to the spray liquid used. The spray liquid used contained about 50% (w/w) solid material the rest of the liquid being water.

The process yielded to a round shaped project with a measured bulk density of 813 kg/m³ and residual moisture of 3.7 % (w/w).

The photomicrograph of the product is shown in Figure 3.

### Example 5 (comparative example)

### Production of intermediate product from red mud by addition of binder in higher concentration

The present example is performed in the same manner as given in Example 3, but polyvinyl alcohol (PVA) was used in a concentration of 4.8 % (w/w). The process yielded to a round shaped project with a measured bulk density of 650 kg/m³ and a residual moisture of 5.3 % (w/w).

The photomicrograph of this product is shown in Figure 4.

It is apparent from the photomicrograph that the roundness and the sphericity of the product according to Example 5 is not in the same range as in the Examples 2 to 4. This shows that the amount of the binder added during the granulation process is critical in respect to the properties of roundness and sphericity.

### Example 6

### Production of sintered spheres from intermediate products

The sintering process for the intermediate products as given in Examples 2 to 4 has been done in a gas fire direct heated kiln. The maximum temperature of the kiln was 1400°C.

### Example 7 (comparative product)

### Production of sintered spheres using dry admixture

Preconditioned red mud from example 1 was used and optionally admixed with additives. Granulation by conventional means could easily be achieved. However, due to fine stones inside the mixture they were destroying granules and at the same time generating less spherical granules. Due to high plasticity of the red mud granulation was possible even with 100 % red mud.

This sintering process is performed in the same way as given in Example 6. In Figures 5a and 5b granules from wet admixture and dry admixture are presented as photomicrographs. It is apparent that roundness and sphericity are depending on the type of the admixture.

## Claims

1. Sintered spheres, obtained from red mud, comprising at least aluminium oxide, iron oxides, silicon oxide, and titanium oxide, **characterized in that** the roundness and the sphericity of the sintered spheres is higher than 0.6.

2. Sintered spheres, according to claim 1, **characterized in that** the size of the sintered spheres is in the range of from 0,2 mm to 1 mm, and/or that the water absorption is in the range up to 8 % (w/w) and/or **in that** the bulk density is in the range from 1,100 to 1,400 kg/m³.

3. Sintered spheres, according to any of the preceding claims, **characterized in that** the spheres further comprise additives and/or binders, wherein the additives are selected from the group consisting of feldspar minerals, alumina minerals, calcinated alumina minerals, clay minerals, or silicate minerals, or mixtures thereof, and wherein the binder is selected from the group consisting of polyvinyl alcohol, polyvinyl acetate, methyl cellulose, dextrine and molasses.

4. Process for the production of sintered spheres, according to claims 1 to 3, comprising the following steps:
a) providing red mud, being a residue from alumina production,
b) optionally adjusting the pH value of the red mud to a value lower than 9,
c) granulating the red mud from step b) under continuous drying,
d) sintering the granulate from step c).

5. Process, according to claim 4, **characterized in that** a step b1) is performed after step b), wherein additives and/or binders are admixed to the red mud and wherein the additives are selected from the group consisting of feldspar minerals, alumina minerals, calcinated alumina minerals, or silicate minerals, or mixtures thereof, and wherein the binder is selected from the group consisting of polyvinyl alcohol, polyvinyl acetate, methyl cellulose, dextrine and molasses, or a mixture thereof.

6. Process, according to any of the claims 4 or 5, **characterized in that** in step b) a slurry is formed form the red mud by adding water, and wherein the ration of red mud and water is the range from 35 / 65 to 65 / 35 (w/w).

7. Process, according to any of the preceding claims 4 to 6, **characterized in that** after step b) the red mud is dried.

8. Process, according to any of the preceding claims 4 to 7, **characterized in that** after step c) the process is stopped and the obtained product isolated as an intermediate product.

9. Intermediate product for the preparation of sintered spheres comprising non-sintered spheres, comprising at least iron oxides, titanium oxide, and aluminium oxide, **characterized in that** the roundness and the sphericity of the non-sintered spheres is higher than 0.6.

10. Intermediate product, according to claim 9, **characterized in that** the density of the non-sintered spheres is in the range of from 800 to 1,000 kg/m³.

11. Use of an intermediate product, according to claims 9 or 10, for the production of sintered spheres according to any of the claims 1 to 3.

12. Use of sintered spheres according to claims 1 to 3, as proppant in fracking processes or as aggregate for construction purposes or for geological solidification processes.
